# EUROPÄISCHE PATENTSCHRIFT

(11) **EP 1 932 332 B1**
(45) Veröffentlichungstag und Bekanntmachung des Hinweises auf die Patenterteilung: **17.02.2010**
(21) Anmeldenummer: 06806777.6
(22) Anmeldetag: 18.09.2006
(51) Int. Cl.: H04M 19/02

(54) **VERFAHREN UND EINRICHTUNG ZUR ÜBERPRÜFUNG DER FUNKTION ZUR INVERTIERUNG DER POLARITÄT AUF EINER MEHRERE ADERN UMFASSENDEN TEILNEHMERANSCHLUSSLEITUNG**
METHOD AND DEVICE FOR TESTING THE FUNCTION FOR INVERTING THE POLARITY ON A SUBSCRIBER CONNECTION LINE COMPRISING SEVERAL WIRES
PROCEDE ET DISPOSITIF DE CONTROLE DE FONCTIONNEMENT POUR INVERSER LA POLARITE SUR UNE LIGNE D'ABONNE COMPRENANT PLUSIEURS FILS

(30) Priorität: 28.09.2005 DE 102005046383
(43) Veröffentlichungstag der Anmeldung: 18.06.2008
(73) Patentinhaber: Nokia Siemens Networks GmbH & Co. KG, 81541 München (DE)
(72) Erfinder: DIEGEL, Heike, 82393 Iffeldorf (DE); DOLLINGER, Rudolf, 81243 München (DE); KRIMMER, Roland, 82110 Germering (DE); SIEBEN, Roland, 82061 Neuried (DE)
(86) Internationale Anmeldenummer: PCT/EP2006/066463
(87) Internationale Veröffentlichungsnummer: WO 2007/036450

(56) Entgegenhaltungen:
- WO-A2-2004/086738
- US-A- 4 843 620
- US-A- 5 970 099

## Beschreibung

Die Erfindung betrifft ein Verfahren und eine Einrichtung zur Überprüfung der Funktion zur Invertierung der Polarität auf einer mehrere Adern umfassenden Teilnehmeranschlussleitung zum Anschluss zumindest eines Teilnehmers an zumindest eine Teilnehmeranschlussschaltung.

Die Betreiber von Kommunikationsnetzen wie beispielsweise dem herkömmlichen Telefonnetz oder Fernsprechnetz stellen den Teilnehmern bzw. ihren Kunden neben der Nutzdatenübermittlung (im Telefonnetz: der Sprache) oftmals eine Vielzahl an weiteren komplexen Leistungen bzw. Teilnehmerleistungsmerkmalen zur Verfügung. Zu diesen Leistungen gehören z.B. Konferenzschaltungen, die Übertragung bzw. Unterdrückung von Rufnummern, die Anrufweiterleitung oder der Gebührenimpuls.

Zur Bereitstellung dieser umfangreichen Leistungen muss die Teilnehmeranschlussbaugruppe (SLM - "subscriber line module") verschiedene Funktionen umfassen. Eine dieser Funktionen ist die so genannte "Reversal"-Funktion oder Invertierungsfunktion, also die Möglichkeit, die Polarität auf den üblicherweise zwei Adern (a und b) einer Teilnehmeranschlussleitung umzukehren. Diese Funktion wird beispielsweise zur Übertragung eines Gebührenimpulses verwendet.

Die Teilnehmeranschlussbaugruppe eines Kommunikationsnetzes ist üblicherweise auf der Seite der Vermittlungsstelle angeordnet. Zudem besteht sie pro angebundenem Teilnehmer zumeist aus zwei Einheiten, der Teilnehmeranschlussschaltung (SLIC - "subscriber line interface circuit") sowie dem Codierer/Decodierer, dem so genannten CODEC.

Dabei stellt die Teilnehmeranschlussschaltung die direkte vermittlungsseitige Anschlussstelle für die Teilnehmeranschlussleitung dar. Die beiden Adern der Teilnehmeranschlussleitung sind mit der Teilnehmeranschlussschaltung physikalisch verbunden und werden von dieser mit den zur Übertragung der Nutzdaten benötigten Signalen versorgt. Bei der Teilnehmeranschlussleitung handelt es sich zumeist um herkömmliche, allgemein bekannte Kupfer-Doppeladern.

Der CODEC wandelt die analogen Signale der Teilnehmerseite in digitale Signale um, die ausgehend von der Vermittlungsstelle weiter über das Kommunikationsnetz ausgesendet werden. Ebenso werden digitale, von der Vermittlungsstelle kommende Signale in analoge Signale umgewandelt und an die Teilnehmeranschlussschaltung weitergeleitet.

Auf dem CODEC sind zumeist zusätzliche weitere Elemente untergebracht. So enthält der CODEC beispielsweise einen so genannten Reversal-Generator. Dieser ist für die Umsetzung der Reversal-Funktion, also für die Umkehrung oder Invertierung der Polarität auf der Teilnehmerseite zuständig.

Bei einer Kontrolle der Funktion "Reversal" der Teilnehmeranschlussbaugruppe muss unter anderem überprüft werden, ob durch die Teilnehmeranschlussbaugruppe bei aktivierter Reversal-Funktion tatsächlich invertierte Polaritäten auf den Adern der Teilnehmeranschlussleitung bereitstellt werden.

Bei herkömmlichen, dem Stand der Technik zuzuordnenden Verfahren wird diese Überprüfung mit einem externen Messgerät durchgeführt. Dabei wird die Reversal-Funktion aktiviert und mit Hilfe des an die Teilnehmeranschlussleitung angeschlossenen Messgeräts wird überprüft, ob die Polarität auf den Adern tatsächlich wechselt.

Ein Beispiel ist aus WO 2004/086738 bekannt.

Nachteilig an einer derartigen Lösung ist jedoch unter anderem die Notwendigkeit der oben beschriebenen, externen Messausrüstung, welche durch zusätzliches Personal entsprechend bedient werden muss.

Die Aufgabe der Erfindung ist daher, den Test der Reversal-Funktion zu verbessern.

Diese Aufgabe wird ausgehend von einem Verfahren gemäß den Merkmalen des Patentanspruchs 1 sowie von einer Einrichtung gemäß den Merkmalen des Patentanspruchs 5 gelöst.

Im Rahmen des erfindungsgemäßen Verfahrens wird die Funktion zur Invertierung der Polarität auf einer mehrere Adern umfassenden Teilnehmeranschlussleitung zum Anschluss zumindest eines Teilnehmers an eine Teilnehmeranschlussbaugruppe, welche zumindest eine Invertierungseinrichtung und eine der Invertierungseinrichtung zugeordnete Strommesseinrichtung umfasst, überprüft. Erfindungsgemäß wird die Teilnehmeranschlussleitung von der deaktivierten Invertierungseinrichtung zumindest teilweise getrennt, auf der Teilnehmeranschlussleitung wird mittels einer verbundenen Gleichstromquelle die Polarität invertiert, und mit Hilfe der Strommesseinrichtung wird eine erste die aktuelle Stromflussrichtung auf der Teilnehmeranschlussleitung repräsentierende Information ermittelt. Anschließend wird die Invertierungseinrichtung aktiviert und es wird mit Hilfe der Strommesseinrichtung eine zweite die aktuelle Stromflussrichtung auf der Teilnehmeranschlussleitung repräsentierende Information ermittelt. Die Gleichstromquelle wird schließlich von der Teilnehmeranschlussleitung getrennt, die Teilnehmeranschlussleitung wird mit der aktivierten Invertierungseinrichtung verbunden, und es wird mit Hilfe der Strommesseinrichtung eine dritte die aktuelle Stromflussrichtung auf der Teilnehmeranschlussleitung repräsentierende Information ermittelt. Abschließend wird mittels der ermittelten ersten, zweiten und dritten Information die Funktion der Invertierung überprüft.

Der wesentliche Vorteil des erfindungsgemäßen Verfahrens besteht darin, dass eine externe Messausrüstung und der damit verbundene zusätzliche personelle und finanzielle Aufwand vermieden werden.

Vorteilhaft wird durch einen Vergleich der ermittelten ersten und der ermittelten zweiten Information eine fehlerfreie Funktion der logischen Umkehrung der internen Stromrichtung in der Teilnehmeranschlussbaugruppe überprüft wird - Anspruch 2.

Durch einen Vergleich der ermittelten zweiten und der ermittelten dritten Information wird vorteilhaft das ordnungsgemäße Invertieren der Polarität auf den Adern der Teilnehmeranschlussleitung durch die Invertierungseinrichtung überprüft - Anspruch 3.

Weitere vorteilhafte Ausführungsformen der Erfindung sowie eine erfindungsgemäße Kommunikationseinrichtung sind den weiteren Ansprüchen zu entnehmen.

Im Folgenden wird die Erfindung mit Hilfe der beigefügten Zeichnungen detaillierter erläutert.

Die Zeichnungen zeigen allgemein in einem Blockschaltbild den schematischen Aufbau einer in einem Kommunikationsnetz angeordneten Teilnehmeranschlussbaugruppe. Insbesondere zeigt:
Fig. 1 ein Anordnungsszenario bei Durchführung eines ersten Abschnitts des erfindungsgemäßen Verfahrens,
Fig. 2 ein Anordnungsszenario bei Durchführung eines zweiten Abschnitts des erfindungsgemäßen Verfahrens und
Fig. 3 ein Anordnungsszenario bei Durchführung eines dritten Abschnitts des erfindungsgemäßen Verfahrens.

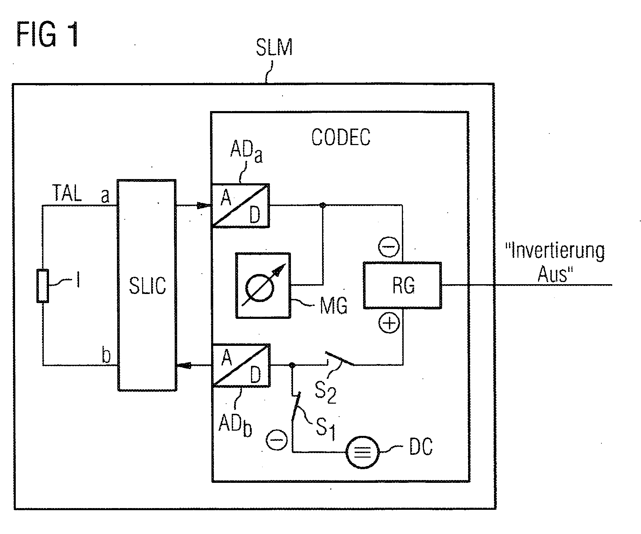

Im Folgenden wird allgemein der schematische Aufbau einer Teilnehmeranschlussbaugruppe in einem herkömmlichen Kommunikationsnetz für die Durchführung des erfindungsgemäßen Verfahrens gemäß den Figuren 1, 2 und 3 beschrieben.

Dabei ist in diesem Beispiel zwischen zwei Adern a und b einer Teilnehmeranschlussleitung TAL auf der Seite der Vermittlungsstelle (nicht dargestellt) eine Testimpedanz I geschaltet. Beim Zuschalten dieser Testimpedanz I wird gleichzeitig der Teilnehmer von der Vermittlungsstelle abgetrennt, wodurch etwaige Störungen des Teilnehmers während der Überprüfung verhindert werden.

Die Teilnehmeranschlussleitung TAL ist mit einer Teilnehmeranschlussschaltung SLIC verbunden, welche wiederum die Schnittstelle zu einem Codierer/Decodierer CODEC der Vermittlungsstelle (nicht dargestellt) darstellt.

Der CODEC umfasst jeweils einen Analog/Digital-Wandler ADₐ, AD_{b} für jede der Adern a, b der Teilnehmeranschlussleitung TAL sowie eine Invertierungseinrichtung ("Peversal-Generator" - RG), eine Gleichstromquelle ("DC-Generator" - DC) und ein Messgerät MG.

Die Invertierungseinrichtung RG ist in mehrere Zustände schaltbar - "Invertierung Aus", "Invertierung An". Im Zustand "Invertierung Aus" gibt die Invertierungseinrichtung RG über die Analog/Digital-Wandler ADₐ, AD_{b} des CODEC und über die SLIC eine negative Spannung (-) an die a-Ader der Teilnehmeranschlussleitung TAL ab. Dementsprechend wird in demselben Zustand die b-Ader mit einer positiven Spannung (+) versorgt. Bei aktivierter Invertierung ("Invertierung An") wird die a-Ader entsprechend mit einer positiven (+), die b-Ader hingegen mit einer negativen Spannung (-) versorgt.

Die Gleichstromquelle DC ist in dem Ausführungsbeispiel nach den Figuren 1, 2 und 3 über einen ersten Schalter S1 sowie über den Analog/Digital-Wandler AD_{b} mit der Seite der b-Ader der SLIC verbunden.

Bei dem folgenden Ausführungsbeispiel des erfindungsgemäßen Verfahrens wird in einem ersten Abschnitt (Fig. 1) die SLIC von der Invertierungseinrichtung RG des CODEC entkoppelt. Hierzu wird ein Schalter S2 geöffnet, durch welchen ein Eingang der Invertierungseinrichtung RG von der b-Ader der Teilnehmeranschlussleitung TAL entkoppelt wird. Anschließend wird über die SLIC auf den beiden Adern a und b der Teilnehmeranschlussleitung TAL eine physikalische Invertierung der Polarität erzwungen. Dies geschieht, wie in Fig. 1 dargestellt, durch das Zuschalten der auf dem CODEC angeordneten digitalen Gleichstromquelle DC an der Seite der SLIC, an die die b-Ader der Teilnehmeranschlussleitung TAL angeschlossen ist - Schließen des Schalters S1.

Obwohl die Invertierungseinrichtung RG des CODEC im ersten Verfahrensabschnitt von der SLIC entkoppelt ist (Fig. 1), muss deren Zustand weiterhin vorgegeben sein (hier: "Invertierung Aus"). Dies liegt darin begründet, dass zahlreiche aktuelle und auch zukünftige Teilnehmeranschlussbaugruppen bei aktivierter Invertierung zusätzlich zur tatsächlichen Umkehrung der Polarität auf der Teilnehmeranschlussleitung TAL zudem die interne Stromrichtung logisch umkehren. Eine logische Umkehrung kann beispielsweise dadurch erfolgen, dass alle auf der Teilnehmeranschlussbaugruppe SLM angeordneten Komponenten (MG, Ada, ADb) eine Information über die Aktivierung der Invertierungseinrichtung RG erhalten. In diesem Fall richten sich die Komponenten entsprechend der neuen, invertierten Stromrichtung aus, d.h. es werden beispielsweise gegebenenfalls die Polaritäten der internen Anzeige- und Messeinrichtungen vertauscht.

Um bei Messungen mittels internen Messgerät MG die Stromrichtung auf den Adern (a, b) korrekt anzeigen zu können, muss der Zustand der Invertierungseinrichtung RG (Invertierung An/Aus) auch im von der Teilnehmeranschlussleitung TAL abgekoppelten Zustand vorgegeben und bekannt sein.

Ist die Gleichstromquelle DC, wie in Fig. 1 zu sehen, über den geschlossenen ersten Schalter S1 schließlich mit der Seite der b-Ader der Teilnehmeranschlussleitung TAL verbunden, wird mit Hilfe des auf dem CODEC angeordneten Messgeräts MG die Polarität und somit die Flussrichtung des Stroms auf der Teilnehmeranschlussleitung TAL bestimmt.

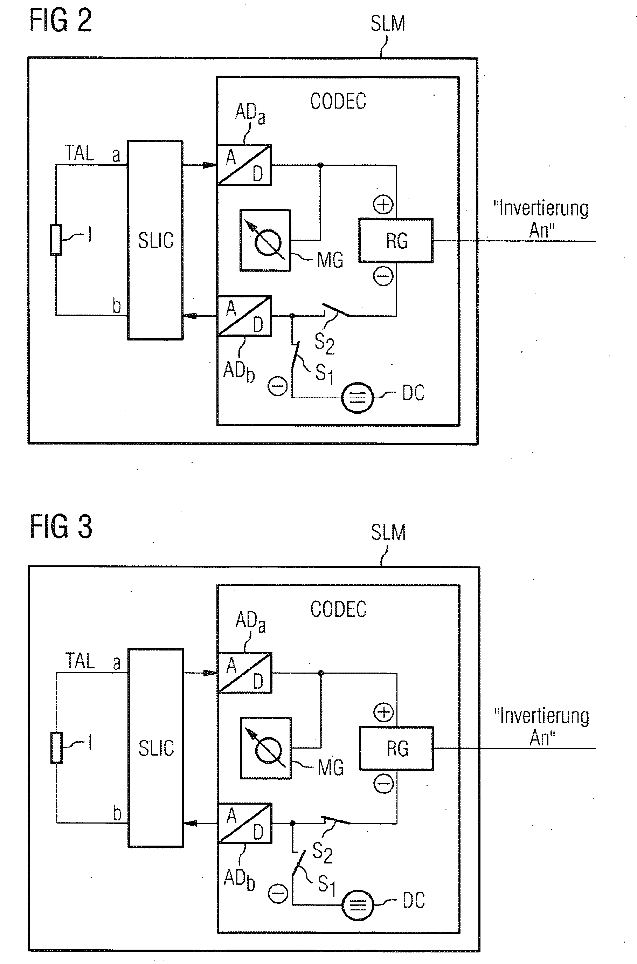

In einem zweiten Verfahrensabschnitt des erfindungsgemäßen Verfahrens (Fig. 2) wird der Zustand der Invertierungseinrichtung RG auf "aktiv" gesetzt. Das heißt, im CODEC wird die Invertierung und somit auch die logische Reversal-Funktion aktiviert.

Da die Invertierungseinrichtung RG weiterhin von der Verbindung zur SLIC abgekoppelt bleibt (S2 offen) und die Gleichstromquelle DC weiterhin mit dem entsprechenden Analog/Digital-Wandler verbunden ist (S1 geschlossen), ändert sich die Polarität auf der a- und der b-Ader der Teilnehmeranschlussleitung TAL nicht.

Aufgrund des durch die Aktivierung der Reversal-Funktion erfolgten Wechsels der internen Stromrichtung muss das Messgerät MG jedoch bei einer in Abschnitt 2 des erfindungsgemäßen Verfahrens erneut durchgeführten Strommessung bei einer fehlerlosen Funktion der logischen Invertierung durch den CODEC eine umgekehrte Polarität des Stromwerts auf der Teilnehmeranschlussleitung TAL anzeigen.

Ändert sich also die vom Messgerät MG bei der zweiten Strommessung angezeigte Stromrichtung im Vergleich zur zuvor ermittelten Stromrichtung, kann somit auf eine fehlerfreie Funktion der logischen Umkehrung der internen Stromrichtung in der Teilnehmeranschlussbaugruppe SLM geschlossen werden. Kann jedoch keine Änderung der angezeigten Stromrichtung festgestellt werden, so muss von einem Fehler bei der Umkehrung der internen Stromrichtung ausgegangen werden.

In einem dritten Verfahrensabschnitt des erfindungsgemäßen Verfahrens wird schließlich die Gleichstromquelle DC von der b-Seite der SLIC abgetrennt (Schalter S1 offen), und die SLIC wird wieder mit der Invertierungseinrichtung RG gekoppelt (S2 geschlossen). Die Verbindung zwischen Invertierungseinrichtung RG und der Teilnehmeranschlussleitung TAL wird also wieder hergestellt.

Die Invertierungseinrichtung RG wird dabei im Zustand "Invertierung An" belassen. Die innere, logische Stromrichtung im CODEC bleibt in Abschnitt 3 demnach dieselbe wie in Abschnitt 2.

Abschließend wird erneut mit Hilfe des Messgeräts MG mittels Strommessung die Stromflussrichtung auf der Teilnehmeranschlussleitung TAL ermittelt.
Ändert sich die vom Messgerät MG angezeigte Stromflussrichtung im Vergleich zur letzten Messung in Abschnitt 2 nicht, so zeigt sich, dass die Invertierungseinrichtung RG im Zustand "Invertierung An" tatsächlich eine Invertierung der Polarität auf den Adern a und b der Teilnehmeranschlussleitung TAL erzeugt. Wird im gegensätzlichen Fall jedoch keine Änderung der Stromrichtung vom Messgerät MG angezeigt, muss von einer fehlerhaften Funktion der Invertierungseinrichtung bezüglich der tatsächlichen Invertierung der Polarität ausgegangen werden.

Durch das erfindungsgemäße Verfahren können somit bei der Überprüfung der Funktion zur Invertierung der Polarität an einem Teilnehmeranschluss eines Kommunikationsnetzes verschiedene Untersuchungen durchgeführt werden. So kann durch die Durchführung aller drei oben erwähnter Verfahrensabschnitte zum einen festgestellt werden, ob die Endstufen der SLIC bei aktivierter Invertierung überhaupt einen Strom abgeben können und ob dieser eine invertierte Polarität aufweist (Überprüfung der tatsächlichen Invertierung der Polarität, siehe Abschnitt 3). Des Weiteren wird in dem oben genannten zweiten Abschnitt des erfindungsgemäßen Verfahrens die Invertierung der internen, logischen Stromrichtung im CODEC gestestet. Im obigen dritten Abschnitt des Verfahrens wird zudem das korrekte Zusammenspiel von SLIC und CODEC einer Teilnehmeranschlussbaugruppe SLM untersucht.

## Patentansprüche

1. Verfahren zur Überprüfung der Funktion zur Invertierung der Polarität auf einer mehrere Adern (a, b) umfassenden Teilnehmeranschlussleitung (TAL) zum Anschluss zumindest eines Teilnehmers an eine Teilnehmeranschlussbaugruppe (SLM), welche zumindest eine Invertierungseinrichtung (RG) und eine der Invertierungseinrichtung (RG) zugeordnete Strommesseinrichtung (MG) umfasst, bei dem
- die Teilnehmeranschlussleitung (TAL) von der deaktivierten Invertierungseinrichtung (RG) zumindest teilweise getrennt wird,
- auf der Teilnehmeranschlussleitung (TAL) mittels einer verbundenen Gleichstromquelle (DC) die Polarität invertiert wird,
- mit Hilfe der Strommesseinrichtung (MG) eine erste die aktuelle Stromflussrichtung auf der Teilnehmeranschlussleitung (TAL) repräsentierende Information ermittelt wird,
- die Invertierungseinrichtung (RG) aktiviert wird,
- mit Hilfe der Strommesseinrichtung (MG) eine zweite die aktuelle Stromflussrichtung auf der Teilnehmeranschlussleitung (TAL) repräsentierende Information ermittelt wird,
- die Gleichstromquelle (DC) von der Teilnehmeranschlussleitung (TAL) getrennt wird,
- die Teilnehmeranschlussleitung (TAL) mit der aktivierten Invertierungseinrichtung (RG) verbunden wird,
- mit Hilfe der Strommesseinrichtung (MG) eine dritte die aktuelle Stromflussrichtung auf der Teilnehmeranschlussleitung (TAL) repräsentierende Information ermittelt wird, und
- mittels der ermittelten ersten, zweiten und dritten Information die Funktion der Invertierung überprüft wird.

2. Verfahren nach Anspruch 1,
**dadurch gekennzeichnet,**
**dass** durch Vergleich der ermittelten ersten und zweiten Information eine fehlerfreie Funktion der logischen Umkehrung der internen Stromrichtung in der Teilnehmeranschlussbaugruppe (SLM) überprüft wird.

3. Verfahren nach Anspruch 1 oder 2,
**dadurch gekennzeichnet,**
**dass** durch Vergleich der ermittelten zweiten und dritten Information das ordnungsgemäße Invertieren der Polarität auf den Adern (a, b) der Teilnehmeranschlussleitung (TAL) durch die Invertierungseinrichtung (RG) überprüft wird.

4. Verfahren einem der vorhergehenden Ansprüche,
**dadurch gekennzeichnet,**
**dass** die Ermittlung der Stromflussrichtung auf der Teilnehmeranschlussleitung (TAL) durch ein Strommessgerät (MG) durchgeführt wird.

5. Einrichtung zur Überprüfung der Funktion zur Invertierung der Polarität auf einer mehrere Adern (a, b) umfassenden Teilnehmeranschlussleitung (TAL) zum Anschluss zumindest eines Teilnehmers an eine Teilnehmeranschlussbaugruppe (SLM), welche zumindest eine Invertierungseinrichtung (RG) und eine der Invertierungseinrichtung (RG) zugeordnete Strommesseinrichtung (MG) umfasst,
- mit Trennmitteln (S₂) zum zumindest teilweisen Trennen der Teilnehmeranschlussleitung (TAL) von der deaktivierten Invertierungseinrichtung (RG),
- mit Invertierungsmitteln zum Invertieren der Polarität auf der Teilnehmeranschlussleitung (TAL), welche eine mit der Teilnehmeranschlussleitung (TAL) verbundene Gleichstromquelle (DC) umfassen,
- mit ersten eine Strommesseinrichtung (MG) umfassenden Messmitteln zum Ermitteln einer ersten die aktuelle Stromflussrichtung auf der Teilnehmeranschlussleitung (TAL) repräsentierenden Information,
- mit Aktivierungsmitteln zum Aktivieren der Invertierungseinrichtung (RG),
- mit zweiten eine Strommesseinrichtung (MG) umfassenden Messmitteln zum Ermitteln einer zweiten die aktuelle Stromflussrichtung auf der Teilnehmeranschlussleitung (TAL) repräsentierenden Information,
- mit Trennmitteln (S₁) zum Trennen der Gleichstromquelle (DC) von der Teilnehmeranschlussleitung (TAL),
- mit Verbindungsmitteln zum Verbinden der Teilnehmeranschlussleitung (TAL) mit der aktivierten Invertierungseinrichtung (RG),
- mit dritten eine Strommesseinrichtung (MG) umfassenden Messmitteln zum Ermitteln einer dritten die aktuelle Stromflussrichtung auf der Teilnehmeranschlussleitung (TAL) repräsentierenden Information, und
- mit Überprüfungsmitteln zum Überprüfen der Funktion der Invertierung mittels der ermittelten ersten, zweiten und dritten Information.

6. Einrichtung nach Anspruch 5,
**dadurch gekennzeichnet,**
**dass** die Messmittel zum Ermitteln der ersten, zweiten und dritten die aktuelle Stromflussrichtung auf der Teilnehmeranschlussleitung (TAL) repräsentierenden Information dieselben Mittel sind.

7. Einrichtung nach Anspruch 5 oder 6,
**dadurch gekennzeichnet,**
**dass** die Überprüfungsmittel derart ausgestaltet sind, dass die fehlerfreie Funktion der logischen Umkehrung der internen Stromrichtung in der Teilnehmeranschlussbaugruppe (SLM) durch Vergleich der ermittelten ersten und zweiten Information ermittelt wird.

8. Einrichtung nach einem der Ansprüche 5 bis 7,
**dadurch gekennzeichnet,**
**dass** die Überprüfungsmittel derart ausgestaltet sind, dass das ordnungsgemäße Invertieren der Polarität auf den Adern (a, b) der Teilnehmeranschlussleitung (TAL) durch die Invertierungseinrichtung (RG) durch Vergleich der ermittelten zweiten und dritten Information überprüft wird.

9. Einrichtung nach einem der Ansprüche 5 bis 8,
**dadurch gekennzeichnet,**
**dass** die Messmittel zum Ermitteln der Stromflussrichtung auf der Teilnehmeranschlussleitung (TAL) ein Strommessgerät (MG) sind.

10. Einrichtung nach einem der vorhergehenden Ansprüche,
**dadurch gekennzeichnet,**
**dass** die Teilnehmeranschlussbaugruppe (SLM) eine Teilnehmeranschlussschaltung (SLIC) und einen Codierer/Decodierer (CODEC) umfasst.

## Claims

1. Method for checking the function for inverting the polarity on a subscriber line (TAL), comprising a plurality of wires (a, b), for connecting at least one subscriber to a subscriber line module (SLM) which comprises at least one inversion device (RG) and a current measuring device (MG) associated with the inversion device (RG), in which
- the subscriber line (TAL) is at least partially isolated from the deactivated inversion device (RG),
- the polarity on the subscriber line (TAL) is inverted using a connected direct current source (DC),
- the current measuring device (MG) is used to ascertain a first item of information representing the present direction of current flow on the subscriber line (TAL),
- the inversion device (RG) is activated,
- the current measuring device (MG) is used to ascertain a second item of information representing the present direction of current flow on the subscriber line (TAL),
- the direct current source (DC) is isolated from the subscriber line (TAL),
- the subscriber line (TAL) is connected to the activated inversion device (RG),
- the current measuring device (MG) is used to ascertain a third item of information representing the present direction of current flow on the subscriber line (TAL), and
- the ascertained first, second and third items of information are used to check that the inversion is functioning.

2. Method according to Claim 1,
**characterized**
**in that** comparison of the ascertained first and second items of information checks that the logical reversal of the internal current direction is functioning correctly in the subscriber line module (SLM).

3. Method according to Claim 1 or 2,
**characterized**
**in that** comparison of the ascertained second and third items of information checks the proper inversion of the polarity on the wires (a, b) of the subscriber line (TAL) by the inversion device (RG).

4. Method according to one of the preceding claims,
**characterized**
**in that** the direction of current flow on the subscriber line (TAL) is ascertained by a current measuring instrument (MG).

5. Device for checking the function for inverting the polarity on a subscriber line (TAL), comprising a plurality of wires (a, b), for connecting at least one subscriber to a subscriber line module (SLM) which comprises at least one inversion device (RG) and a current measuring device (MG) associated with the inversion device (RG),
- having isolation means (S₂) for at least partially isolating the subscriber line (TAL) from the deactivated inversion device (RG),
- having inversion means for inverting the polarity on the subscriber line (TAL) which comprise a direct current source (DC) connected to the subscriber line (TAL),
- having first measuring means, comprising a current measuring device (MG), for ascertaining a first item of information representing the present direction of current flow on the subscriber line (TAL),
- having activation means for activating the inversion device (RG),
- having second measuring means, comprising a current measuring device (MG), for ascertaining a second item of information representing the present direction of current flow on the subscriber line (TAL),
- having isolation means (S₁) for isolating the direct current source (DC) from the subscriber line (TAL),
- having connection means for connecting the subscriber line (TAL) to the activated inversion device (RG),
- having third measuring means, comprising a current measuring device (MG), for ascertaining a third item of information representing the present direction of current flow on the subscriber line (TAL), and
- having checking means for checking that the inversion is functioning using the ascertained first, second and third items of information.

6. Device according to Claim 5,
**characterized**
**in that** the measuring means for ascertaining the first, second and third items of information representing the present direction of current flow on the subscriber line (TAL) are the same means.

7. Device according to Claim 5 or 6,
**characterized**
**in that** the checking means are in a form such that the logical reversal of the internal current direction is ascertained to be functioning correctly in the subscriber line module (SLM) by comparing the ascertained first and second items of information.

8. Device according to one of Claims 5 to 7,
**characterized**
**in that** the checking means are in a form such that the proper inversion of the polarity on the wires (a, b) of the subscriber line (TAL) by the inversion device (RG) is checked by comparing the ascertained second and third items of information.

9. Device according to one of Claims 5 to 8,
**characterized**
**in that** the measuring means for ascertaining the direction of current flow on the subscriber line (TAL) are a current measuring instrument (MG).

10. Device according to one of the preceding claims,
**characterized**
**in that** the subscriber line module (SLM) comprises a subscriber line interface circuit (SLIC) and an encoder/decoder (CODEC).

## Revendications

1. Procédé de contrôle du fonctionnement pour inverser la polarité sur une ligne d'abonné (TAL) comprenant plusieurs fils (a, b) pour le raccordement d'au moins un abonné à un sous-groupe de ligne d'abonné (SLM), lequel comprend au moins un dispositif inverseur (RG) et un dispositif de mesure de courant (MG), affecté au dispositif inverseur (RG), dans lequel
- la ligne d'abonné (TAL) est séparée au moins en partie du dispositif inverseur désactivé (RG),
- la polarité est inversée sur la ligne d'abonné (TAL) au moyen d'une source de courant continu (DC) connectée,
- une première information représentant le sens actuel du flux du courant sur la ligne d'abonné (TAL) est déterminée au moyen du dispositif de mesure de courant (MG),
- le dispositif inverseur (RG) est activé,
- une deuxième information représentant le sens actuel du flux du courant sur la ligne d'abonné (TAL) est déterminée au moyen du dispositif de mesure de courant (MG),
- la source de courant continu (DC) est séparée de la ligne d'abonné (TAL),
- la ligne d'abonné (TAL) est connectée au dispositif inverseur (TG) activé,
- une troisième information représentant le sens actuel du flux du courant sur la ligne d'abonné (TAL) est déterminée au moyen du dispositif de mesure de courant (MG), et
- le fonctionnement de l'inversion est vérifié au moyen des première, deuxième et troisième informations.

2. Procédé selon la revendication 1,
**caractérisé en ce**
**qu'**un fonctionnement sans erreur de l'inversion logique du sens du courant interne est contrôlé dans le sous-groupe de ligne d'abonné (SLM) par comparaison de la première et de la deuxième informations déterminées.

3. Procédé selon la revendication 1 ou 2,
**caractérisé en ce**
**que** l'inversion correcte de la polarité sur les fils (a, b) de la ligne d'abonné (TAL) est contrôlée par le dispositif inverseur (RG) par comparaison de la première et de la deuxième informations déterminées.

4. Procédé selon l'une quelconque des revendications précédentes,
**caractérisé en ce**
**que** la détermination du sens du flux du courant sur la ligne d'abonné (TAL) est réalisée au moyen d'un appareil de mesure de courant (MG).

5. Dispositif pour le contrôle du fonctionnement pour inverser la polarité sur une ligne d'abonné (TAL) comprenant plusieurs fils (a, b) pour le raccordement d'au moins un abonné à un sous-groupe de ligne d'abonné (SLM), lequel comprend au moins un dispositif inverseur (RG) et un dispositif de mesure de courant (MG), affecté au dispositif inverseur (RG),
- comprenant des moyens de séparation (S₂) pour séparer au moins en partie la ligne d'abonné (TAL) du dispositif inverseur désactivé (RG),
- comprenant des moyens d'inversion pour invertir la polarité sur la ligne d'abonné (TAL), lesquels comprennent une source de courant continu (DC) connectée à la ligne d'abonné (TAL),
- comprenant des premiers moyens de mesure comprenant un dispositif de mesure de courant (MG) pour déterminer une première information représentant le sens actuel du flux du courant sur la ligne d'abonné (TAL),
- comprenant des moyens d'activation pour activer le dispositif inverseur (RG),
- comprenant des deuxièmes moyens de mesure comprenant un dispositif de mesure de courant (MG) pour déterminer une deuxième information représentant le sens actuel du flux du courant sur la ligne d'abonné (TAL),
- comprenant des moyens de séparation (S₁) pour séparer la source de courant continu (DC) de la ligne d'abonné (TAL),
- comprenant des moyens de raccordement pour raccorder la ligne d'abonné (TAL) au dispositif inverseur activé (RG),
- comprenant des troisièmes moyens de mesure comprenant un dispositif de mesure de courant (MG) pour déterminer une troisième information représentant le sens actuel du flux du courant sur la ligne d'abonné (TAL) et
- comprenant des moyens de contrôle pour contrôler le fonctionnement de l'inversion au moyen des première, deuxième et troisième informations déterminées.

6. Procédé selon la revendication 5,
**caractérisé en ce**
**que** les moyens de mesure pour déterminer la première, la deuxième et la troisième informations représentant le sens actuel du flux du courant sur la ligne d'abonné (TAL) sont les mêmes moyens.

7. Procédé selon la revendication 5 ou 6,
**caractérisé en ce**
**que** les moyens de contrôle sont réalisés de manière à ce que le fonctionnement sans erreur de la conversion logique du sens du courant interne soit contrôlé dans le sous-groupe de ligne d'abonné (SLM) par comparaison de la première et de la deuxième informations déterminées.

8. Procédé selon l'une quelconque des revendications 5 à 7,
**caractérisé en ce**
**que** les moyens de contrôle sont réalisés de manière à ce que l'inversion correcte de la polarité sur les fils (a, b) de la ligne d'abonné (TAL) soit contrôlée par le dispositif inverseur (RG) par comparaison de la deuxième et de la troisième informations déterminées.

9. Procédé selon l'une quelconque des revendications 5 à 8,
**caractérisé en ce**
**que** les moyens de mesure pour déterminer le sens du flux du courant sur la ligne d'abonné (TAL) sont un appareil de mesure de courant (MG).

10. Procédé selon l'une quelconque des revendications précédentes,
**caractérisé en ce**
**que** le sous-groupe de ligne d'abonné (SLM) comprend un circuit de ligne d'abonné (SLIC) et un codeur/décodeur (CODEC).
